Europäisches Patentamt

European Patent Office

Office européen des brevets

(11) Veröffentlichungsnummer: **0 484 810 A1**

# (12) EUROPÄISCHE PATENTANMELDUNG

(21) Anmeldenummer: **91118474.5**

(22) Anmeldetag: **30.10.91**

(51) Int. Cl.5: **A47B 87/02**, A47F 7/14, B42F 17/08, F16B 5/07, A47B 87/00, A47B 63/00, B65D 21/02

(30) Priorität: **03.11.90 DE 4035014**

(43) Veröffentlichungstag der Anmeldung:
**13.05.92 Patentblatt 92/20**

(84) Benannte Vertragsstaaten:
**AT BE CH DE DK ES FR GB GR IT LI LU NL SE**

(71) Anmelder: **Confon AG**
**Langenhag 31**
**CH-9424 Rheineck(CH)**

(72) Erfinder: **Halm, Hans**
**Castroper Strasse 34**
**W-4690 Herne 1(DE)**

(74) Vertreter: **Patentanwaltsbüro Cohausz & Florack**
**Schumannstrasse 97**
**W-4000 Düsseldorf 1(DE)**

(54) **Vorrichtung für Büro, Haushalt, Hobby oder Gewerbe.**

(57) Die Erfindung betrifft eine Vorrichtung für Büro, Haushalt, Hobby oder Gewerbe insbesondere Ständer für Zeitungen, Schriften, Papiere, Bilder und (Tonträger-) Platten mit zwei senkrechten zueinander parallel im Abstand angeordneten äußeren Seitenflächen, wobei die Außenseiten der Seitenflächen Befestigungsmitteltragen, durch die die Seitenflächen einer Vorrichtung mit den benachbarten Seitenflächen einer zweiten Vorrichtung ösbar verbindbar sind, daß die Befestigungsmittel Vorsprünge und/oder Ausnehmungen aufweisen, die in Ausnehmungen und/oder Vorsprünge der Seitenflächen der benachbarten Vorrichtung formschlüssig insbesondere klemmend einliegen.

Die Erfindung betrifft eine Vorrichtung für Büro, Haushalt, Hobby oder Gewerbe insbesondere Ständer für Zeitungen, Schriften, Papiere, Bilder und (Tonträger-) Platten mit zwei senkrechten zueinander parallel im Abstand angeordneten äußeren Seitenflächen.

Es ist bekannt, mehrere Vorrichtungen gleicher Art und Größe nebeneinander oder übereinander zu stellen und aneinander lösbar zu befestigen. Die hierfür verwendeten bekannten Befestigungsmittel sind konstruktiv aufwendig, teuer in der Herstellung und meist umständlich zu handhaben.

So weisen bekannte Ständer zum Sammeln von Zeitschriften, Bildern und Schallplatten in senkrechter Stellung zwei rechteckförmige Seitenflächen auf, die den größten Teil der gehaltenen Gegenstände überdecken, so daß diese kaum noch sichtbar sind. Sie besitzen große Außenabmessungen, so daß sie teuer in der Herstellung sind und insbesondere bei Lagerung und Transport verhältnismäßig viel Platz benötigen. In der Regel bestehen keine seitlichen Befestigungen. Durch zusätzliche Klammern oder Klebemittel kann ein Halt aneinander erreicht werden.

Aufgabe der Erfindung ist es, eine Vorrichtung der eingangs genannten Art so zu verbessern, daß bei einfacher Konstruktion und Herstellung ein sicherer, leicht handhabbarer und formschöner Halt zwischen zwei Vorrichtungen erreichbar ist.

Diese Aufgabe wird erfindungsgemäß dadurch gelöst, daß die Außenseiten der Seitenflächen Befestigungsmittel tragen, durch die die Seitenflächen einer Vorrichtung mit den benachbarten Seitenflächen einer zweiten Vorrichtung lösbar verbindbar sind, daß die Befestigungsmittel Vorsprünge und/oder Ausnehmungen aufweisen, die in Ausnehmungen und/oder Vorsprünge der Seitenflächen der benachbarten Vorrichtung formschlüssig insbesonders klemmend einliegen.

Hierdurch können stabile Reihen von Vorrichtungen beliebiger Länge erzielt werden, wobei der Fantasie des Benutzers wenig Grenzen gesetzt sind, da Stellung und Farben veränderbar sind. Hierbei ist es von besonderem Vorteil, daß die Befestigungsmittel der Seitenflächen einer Vorrichtung Vorsprünge und/oder Ausnehmungen aufweisen, die in Ausnehmungen und/oder Vorsprünge der Seitenflächen der benachbarten Vorrichtung formschlüssig insbesonders klemmend einliegen. Hierbei können die Vorsprünge Zapfen und/oder Rippen und die Rücksprünge Näpfe und/oder Nuten sein. Von besonderem Vorteil ist es, wenn die Befestigungsmittel ein an der Außenseite der Seitenflächen vorstehends Befestigungsband bilden, das mehrere zueinander parallele Rippen aufweist, die zwischen sich Nuten für die Rippen der benachbarten Vorrichtung bilden. Die Rippen des Befestigungsbandes können durch Reihen von Zapfen unterbrochen sein, die mit den Rippen fluchten. Auch wird vorgeschlagen, daß das Befestigungsband einen Winkel von 45 Grad mit einer Waagerechten bildet.

Besonders standfeste, stabile und formschöne Reihen von Vorrichtungen werden erreicht, wenn die Befestigungsmittel Zwischenbereiche insbesondere Ausnehmungen und/oder Nuten bilden, in die die Befestigungsmittel der benachbarten Vorrichtung in einer um 90 Grad verdrehten Stellung eindrückbar sind. Hierbei ist es von besonderem Vorteil wenn, zwei benachbarte Vorrichtungen in der Weise aneinander befestigbar sind, daß die oberen und unteren waagerechten Schenkel jeweils in entgegengesetzte Richtungen weisen.

Beide Seitenflächen können je zwei Ausschnitte aufweisen, durch die jeweils ein Z-förmiges Scheibenband als Rest verbleibt, wobei beide Seitenflächen im unteren Bereich durch die Standflächen und im oberen Bereich durch die Endfläche miteinander verbunden sind. Hierdurch wird eine Vorrichtung insbesondere ein Ständer geschaffen, die/der bei ansprechendem Äußeren von geringen Abmessungen und Gewicht ist und variabel verwendet werden kann, wobei die gehaltenen Gegenstände gut sichtbar bleiben.

Eine solche Vorrichtung ist nicht nur formschön, sondern auch variabel, d.h. es können viele Vorrichtungen bzw. Ständer nebeneinander gestellt werden um eine Reihe zu bilden, wobei benachbarte Vorrichtungen entgegengesetzt ausgerichtet sein können. Die Vorrichtung bzw. der Ständer weist geringe Abmessungen auf und damit ein geringes Gewicht, so daß zu seiner Herstellung verhältnismäßig wenig Material (Kunststoff) verwendet wird. Die Vorrichtung ist von hoher Stabilität und kann eng gestapelt werden. Von besonderem Vorteil ist, daß die gehaltenen Gegenstände gut sichtbar sind und leicht gegriffen werden können, da ein Großteil der Schriften, Bilder oder Platten die Vorrichtung zumindest seitlich überragt, so daß von Hand zugegriffen werden kann ohne die Hand in die Vorrichtung zwängen zu müssen.

Besonders vorteilhaft ist es, wenn die zwei zueinander parallel verlaufenden Seitenflächen jeweils einen unteren und oberen waagerechten Schenkel bilden, die durch ein senkrechtes Mittelteil miteinander verbunden sind, hierbei können beide Schenkel mit dem Mittelteil über Zwischenbereiche verbunden sein, die Winkel von 135 Grad mit den Schenkeln und dem Mittelteil bilden.

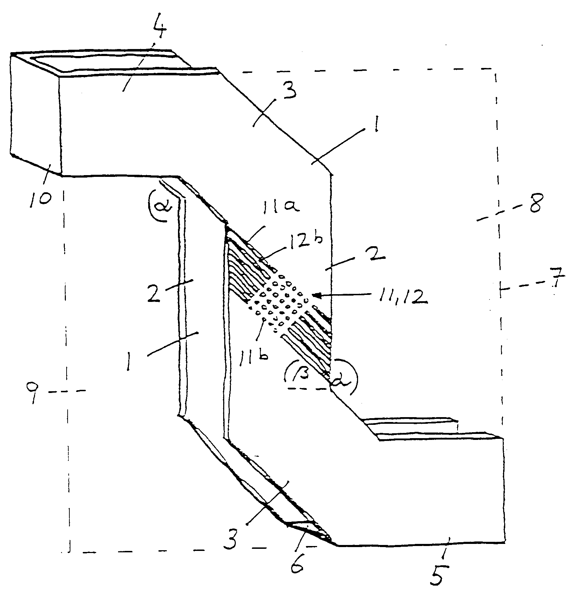

Ein Ausführungsbeispiel der Erfindung ist in der Zeichnung perspektivisch an Hand eines Ständers dargestellt und wird im folgenden näher beschrieben.

Die Vorrichtung kann unter anderem ein Display, Regal, Ablegefach und anderes sein. In diesem Beispiel ist sie ein Ständer, der zwei zueinander parallele im Abstand stehende senkrechte Seitenflächen 1 aufweist, zwischen die die zu haltenden Gegenstände insbesondere Zeitungen, Schriften, Papiere, Bilder oder Tonträgerplatten senkrecht gestellt werden können. Jede Seitenflache besteht aus einem Scheibenband mit einem senkrechten Mittelteil 2 und daran anschließenden 45 Grad geneigten Zwischenbereichen 3, an die wiederum sich oben ein waagerechter Schenkel 4 und unten ein waagerechter Schenkel 5 anschließt. Die Teile 2 bis 5 bilden somit einen S-förmig mehrfach abgewinkeltes Scheibenband, wobei der obere Schenkel 4 in entgegengesetzter Richtung abgebogen ist als der untere waagerechte Schenkel 5. Das Scheibenband bildet somit einen Bereich eines Rechteckes 7, von dem ein oberer seitlicher Ausschnitt 8 herausgenommen ist und auf der entgegengesetzten unteren Seite bzw. Ecke ein gleich großer zweiter Ausschnitt 9 entnommen wurde.

Die unteren waagerechten Kanten der unteren Schenkel 5 sind durch eine waagerechte Standfläche 6 miteinander verbunden, auf der die gehaltenen Gegenstände stellbar sind. Die oberen waagerechten Schenkel 4 sind an den den Zwischenbereich 3 abgewandten senkrechten Kanten durch eine senkrechte Wand 10 rechtwinkelig verbunden.

Die Außenseiten beider Seitenflächen 1 tragen Befestigungsmittel in Form von Vorsprüngen 11 und Ausnehmungen 12. Die Vorsprünge sind insbesondere Rippen 11a und/oder Zapfen 11b, die in Ausnehmungen 12 insbesondere in Rücksprüngen, Näpfe oder Nuten 12b einer Seitenfläche einer benachbarten Vorrichtung formschlüssig eindrückbar sind, so daß eine haltbare ader lösbare Klemmverbindung zwischen zwei Vorrichtungen besteht. Hierbei können diese Befestigungsmittel ein an der Außenseite der Seitenfläche vorstehendes Befestigungsband bilden, daß mehrere zueinander parallele Rippen 11a und Nuten 12b aufweist. Die Rippen dieses Befestigungsbandes können durch Reihen von Zapfen 11b unterbrochen sein. Besonders vorteilhaft ist es hierbei, wenn die Zapfen 11b in einem solch breiten Feld quer zur Befestigungsbandlängsrichtung angeordnet sind, daß das Befestigungsband einer benachbarten Vorrichtung kreuzend auf dem ersten Befestigungsband eingedrückt werden kann.

Im gezeigten Ausführungsbeispiel bildet hierbei das Befestigungsband einen Winkel ($\beta$) von 45 Grad zu einer Waagerechten. Das Bestigungsband kann aber auch waagerecht oder senkrecht angeordnet werden.

**Patentansprüche**

1. Vorrichtung für Büro, Haushalt, Hobby oder Gewerbe insbesondere Ständer für Zeitungen, Schriften, Papiere, Bilder und (Tonträger-) Platten mit zwei senkrechten zueinander parallel im Abstand angeordneten äußeren Seitenflächen (1), **dadurch gekennzeichnet,** daß die Außenseiten der Seitenflächen (1) Befestigungsmittel (11, 12) tragen, durch die die Seitenflächen (1) einer Vorrichtung mit den benachbarten Seitenflächen (1) einer zweiten Vorrichtung lösbar verbindbar sind und daß die Befestigungsmittel Vorsprünge (11) und/oder Ausnehmungen (12) aufweisen, die in Ausnehmungen (12) und/oder Vorsprünge (11) der Seitenflächen (1) der benachbarten Vorrichtung formschlüssig insbesonders klemmend einliegen.

2. Vorrichtung nach Anspruch 1, **dadurch gekennzeichnet,** daß die Vorsprünge Zapfen (11b) und/oder Rippen (11a) und die Rücksprünge Näpfe (12b) und/oder Nuten (12b) sind.

3. Vorrichtung nach Anspruch 1 oder 2, **dadurch gekennzeichnet,** daß die Befestigungsmittel (11, 12) ein an der Außenseite der Seitenflächen vorstehendes Befestigungsband bilden, das mehrere zueinander parallele Rippen (11a) aufweist, die zwischen sich Nuten (12b) für die Rippen (11a) des benachbarten Ständers bilden.

4. Vorrichtung nach Anspruch 3, **dadurch gekennzeichnet,** daß die Rippen (11a) des Befestigungsbandes durch Reihen von Zapfen (11b) unterbrochen sind, die mit den Rippen (11a) fluchten.

5. Vorrichtung nach Anspruch 3 oder 4, **dadurch gekennzeichnet,** daß das Befestigungsband einen Winkel ($\beta$) von 45 Grad mit einer Waagerechten bildet.

6. Vorrichtung nach einem der vorherigen Ansprüche, **dadurch gekennzeichnet,** daß die Befestigungsmittel Zwischenbereiche insbesondere Ausnehmungen und/oder Nuten bilden, in die die Befestigungsmittel der benachbarten Vorrichtung in einer um 90 Grad verdrehten Stellung eindrückbar sind.

7. Vorrichtung nach einem der vorherigen Ansprüche, **dadurch gekennzeichnet,** daß zwei benachbarte Vorrichtungen in der Weise aneinander befestigbar sind, daß die oberen und unteren waagerechten Schenkel (4, 5) jeweils in entgegengesetzte Richtungen weisen.

8. Vorrichtung nach einem der vorherigen Ansprüche, **dadurch gekennzeichnet,** daß beide Seitenflächen (1) je zwei Ausschnitte (8, 9) aufweisen, durch die jeweils ein Z-förmiges Scheibenband (2-5) als Rest verbleibt, und beide Seitenflächen (1) im unteren Bereich durch die Standflächen (6) und im oberen Bereich durch die Endfläche (1a) miteinander verbunden sind.

9. Vorrichtung nach Anspruch 8, **dadurch gekennzeichnet,** daß die zwei zueinander parallel verlaufenden Seitenflächen (1) jeweils einen unteren und oberen waagerechten Schenkel (4, 5) bilden, die durch ein senkrechtes Mittelteil (2) miteinander verbunden sind.

10. Vorrichtung nach Anspruch 9, **dadurch gekennzeichnet,** daß beide Schenkel (4, 5) mit dem Mittelteil (2) über Zwischenbereiche (3) verbunden sind, die Winkel ($\alpha$) von 135 Grad mit den Schenkeln (4, 5) und dem Mittelteil (2) bilden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 291 724 (GOODMANN) | 1,2 | A47B87/02 |
| Y |  | 3,6 | A47F7/14 |
|  | * Seite 2, Zeile 1 - Seite 4, Zeile 1; | | B42F17/08 |
|  | Abbildungen 1,6 * | | F16B5/07 |
|  | --- | | A47B87/00 |
| Y | DE-U-8 807 193 (RUSS) | 3,6 | A47B63/00 |
|  | * Anspruch 1; Abbildungen 1,3 * | | B65D21/02 |
|  | --- | | |
| A | DE-A-2 433 570 (ORSCHLER PRODUKTION) | 8 | |
|  | * Abbildung 1 * | | |
|  | --- | | |
| A | US-A-4 909 398 (SANTUCCI) | 1-3 | |
|  | * Spalte 3, Zeile 38 - Spalte 4, Zeile 38; | | |
|  | Abbildungen 1-3,12 * | | |
|  | --- | | |
| P,A | DE-U-9 104 134 (ELDON INDUSTRIES) | 7 | |
|  | * Abbildungen 3,10,11 * | | |
|  | | | |
|  | ----- | | |

**RECHERCHIERTE SACHGEBIETE (Int. Cl.5)**

A47F
A47B
F16B
B42F
G11B
B65D

Der vorliegende Recherchenbericht wurde für alle Patentansprüche erstellt

| Recherchenort | Abschlußdatum der Recherche | Prüfer |
|---|---|---|
| DEN HAAG | 31 JANUAR 1992 | DE GROOT R.K. |

EPO FORM 1503 03.82 (P0403)